# EUROPEAN PATENT SPECIFICATION

(11) **EP 2 993 020 B1**
(45) Date of publication and mention of the grant of the patent: **07.11.2018**
(21) Application number: 15183650.9
(22) Date of filing: 03.09.2015
(51) Int. Cl.: B29C 41/38, C08L 29/04, C08L 33/02

(54) **WATER-DECOMPOSABLE RESIN COMPOSITION AND SUPPORT MATERIAL FOR USE IN MODELING**
WASSERABBAUBARE HARZZUSAMMENSETZUNG UND TRÄGERMATERIAL ZUR VERWENDUNG BEI DER MODELLIERUNG
COMPOSITION DE RÉSINE DÉCOMPOSABLE DANS L'EAU ET MATÉRIAU SUPPORT DESTINÉ À ÊTRE UTILISÉ DANS LA MODÉLISATION

(30) Priority: 04.09.2014 JP 2014179952; 04.08.2015 JP 2015154231
(43) Date of publication of application: 09.03.2016
(73) Proprietor: Ricoh Company, Ltd., Tokyo 143-8555 (JP)
(72) Inventor: YAMABE, Atsumi, Tokyo, 143-8555 (JP); IWASAKI, Koji, Tokyo, 143-8555 (JP); OHTANI, Shinji, Tokyo, 143-8555 (JP); TAMOTO, Nozomu, Tokyo, 143-8555 (JP)
(74) Representative: White, Duncan Rohan

(56) References cited:
- WO-A1-99/60507
- WO-A1-2007/049952
- VAZQUEZ-TORRES H ET AL: "POLY(VINYL ALCOHOL)/POLY(ACRYLIC ACID) BLENDS: MISCIBILITY STUDIES BY DSC AND CHARACTERIZATION OF THEIR THERMALLY INDUCED HYDROGELS", JOURNAL OF APPLIED POLYMER SCIENCE, WILEY, US, vol. 50, no. 5, 5 November 1993 (1993-11-05), pages 777-792, XP000464170, ISSN: 0021-8995, DOI: 10.1002/APP.1993.070500505

## Description

### BACKGROUND

### Technical Field

The present disclosure relates to a resin composition and to a support material for use in modeling.

### Description of the Related Art

In the fields of medicine, architecture, manufacture, etc., three-dimensional modeling technology has been used for the purpose of obtaining products or parts having desired shapes. One example of three-dimensional modeling technology involves fused deposition modeling (FDM). In FDM, a resin composition called model material is melted and formed into a layer having a specific shape. This operation is repeated to stack the layers and obtain a three-dimensional product having a desired shape. When another resin composition called support material supports the model material during the modeling, the resulting three-dimensional product can have a cup-like shape which is reversely tapered in the direction of layer stacking or a torus-like (handle-like) shape.

The support material is required to have heat-melting property and heat resistance for supporting the model material during the modeling or molding. The support material is also required to be easily removable from the modeled product after the modeling. As an example of the support material having such properties, a water soluble thermoplastic composition including poly(2-ethyl-2-oxazoline) and an inert filler has been proposed in JP-2002-516346-A (corresponding to WO 1999/060507). It is described therein that this composition is easily removable from the model material because of being extrusion moldable at high temperatures and water soluble. However, poly(2-ethyl-2-oxazoline) is insufficient in water solubility to be used as the support material. It may take a long time and a lot of trouble when removing such a support material.

On the other hand, polyvinyl alcohol resin has been used as a melt-moldable and highly-water-soluble material for film formation. JP-2004-75866-A describes that when a specific polyvinyl alcohol resin composition is molded into a film having a thickness of 1 mm and immersed in water at 30°C, the molded product becomes swelled without retaining its original form or almost dissolved.

In some cases, a resin composition is required to be molded into various shapes such as a block-like shape, not limited to a film-like shape. However, related-art resin compositions have difficulty in being molded into a desired shape or being removed from the molded product because of their poor nozzle discharge stability.

### SUMMARY

In accordance with the present invention, a water-decomposable resin composition is provided. The water-decomposable resin composition includes a polyvinyl alcohol resin and a water absorptive resin. The polyvinyl alcohol resin has a melting point and a temperature at which the weight thereof decreases by 10% due to heat, and the difference between the melting point and this temperature is 100°C or more. The water-decomposable resin composition can be easily molded and removed from the molded product.

In accordance with some embodiments of the present invention, a support material for use in modeling is provided. The support material includes the above water-decomposable resin composition.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:

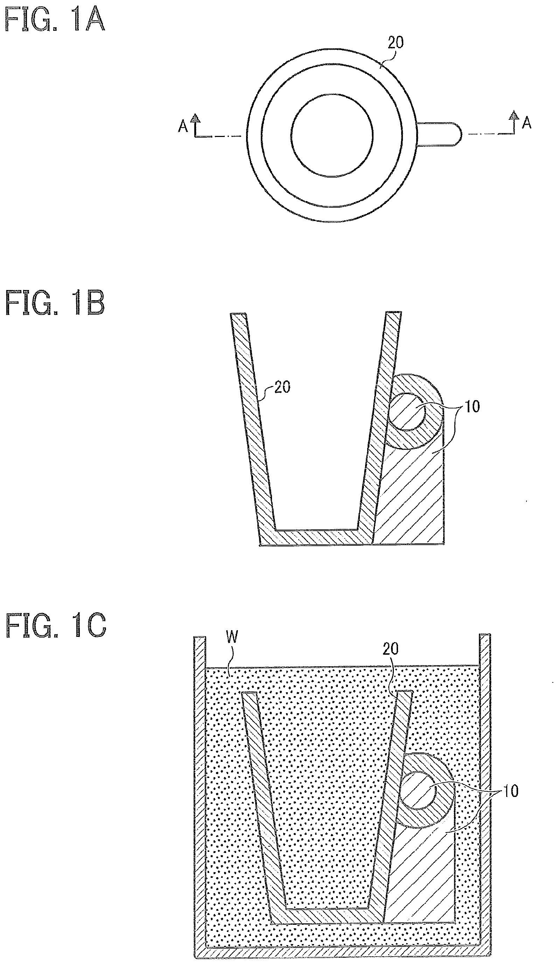

FIGS. 1A to 1C are views of a modeled product modeled with a support material according to an embodiment of the present invention.

### DETAILED DESCRIPTION

Embodiments of the present invention are described in detail below with reference to the accompanying drawings. In describing embodiments illustrated in the drawings, specific terminology is employed for the sake of clarity. However, the disclosure of this patent specification is not intended to be limited to the specific terminology so selected.

For the sake of simplicity, the same reference number will be given to identical constituent elements such as parts and materials having the same functions and redundant descriptions thereof omitted unless otherwise stated.

In accordance with the present invention, a resin composition including a polyvinyl alcohol resin is provided which can be easily molded and removed from the molded product.

### Overall Structure

The water-decomposable resin composition according to an embodiment of the present invention includes a polyvinyl alcohol resin and a water absorptive resin. The polyvinyl alcohol resin has a melting point and a temperature at which the weight thereof decreases by 10% due to heat, and the difference between the melting point and this temperature is 100°C or more.

In accordance with some embodiments of the present invention, the water-decomposable resin composition can be used as a material which is moldable into a desired shape and water-decomposable thereafter, such as a support material in modeling. FIGS. 1A to 1C are views of a modeled product modeled with a support material according to an embodiment of the present invention. Related-art support materials for use in stereoscopic modeling have various problems. For example, they disadvantageously require a long time when being removed from the modeled product, which may cause deformation or color fading in the modeled product. Additionally, they have difficulty in being removed from the modeled product, which may cause destruction of the modeled product. Moreover, they may be decomposed or solidified in the process of being discharged from nozzles, thereby clogging the nozzles. Even when normally discharged from nozzles, they cannot be formed into a desired shape, resulting in a lower accuracy of modeling. In accordance with the present invention, a resin composition including a polyvinyl alcohol resin is provided which is not likely to cause defective discharge and has stable modeling property. The resin composition is rapidly dissolved or decomposed as the modeled product is immersed in water. When used as a support material, the resin composition can be rapidly and easily removed after completion of the modeling. FIG. 1A is a top view of the modeled product before the support material is removed. FIG. 1B is a schematic cross-sectional view of the modeled product taken from line A-A of FIG. 1A. FIG. 1C is a schematic cross-sectional view of the modeled product immersed in water taken from line A-A of FIG. 1A.

A support material 10 is composed of a water-decomposable resin composition including a polyvinyl alcohol resin and a water absorptive resin. The polyvinyl alcohol resin has a melting point and a temperature at which the weight thereof decreases by 10% due to heat, and the difference between the melting point and this temperature is 100°C or more. The water absorptive resin has water absorption power. When the support material 10 is immersed in water W together with a modeled product 20, the water absorptive resin changes to a gel. Decomposition of the support material 10 is accelerated by this change. Even when the support material 10 is relatively thick, it becomes easier to remove the support material 10 from the modeled product 20.

The water-decomposable resin composition may further include a foaming agent. Preferably, the foaming agent generates a gas upon contact with water. When the support material 10 containing such a foaming agent which generates a gas upon contact with water is immersed in water W together with the modeled product 20, a gas is generated in the support material 10, forming voids therein. Decomposition of the support material 10 is accelerated thereby. Even when the support material 10 is relatively thick, it becomes easier to remove the support material 10 from the modeled product 20.

The water-decomposable resin composition may further include a filler along with or in place of the foaming agent. As with the voids, the filler also accelerates destruction of the support material, which is advantageous.

### Constituent Materials

Constituent materials for the water-decomposable resin composition are described below.

### Polyvinyl Alcohol Resin

Since the water-decomposable resin composition is decomposed or destroyed when being immersed in water, constituent materials thereof have water solubility. One example of such materials includes a polyvinyl alcohol resin. Specific examples of the polyvinyl alcohol resin include a polyvinyl alcohol and a polymer having a vinyl alcohol structural unit.

In accordance with some embodiments of the present invention, the polyvinyl alcohol resin has a melting point and a temperature at which the weight thereof decreases by 10% due to heat. The difference between the melting point and this temperature is 100°C or more, and preferably 140°C or more. Here, the melting point is defined as a temperature at which the polyvinyl alcohol resin is melted and liquefied by heat. The melting point is measurable by various means. For example, the melting point can be measured by a differential scanning calorimeter (DSC) or a differential thermal analyzer (DTA). Preferably, the melting point is measured by DSC. DSC is an instrument that measures endothermic or exothermic reactions associated with change in state of a sample. More specifically, DSC measures a difference in heat quantity between a reference substance and the sample while constantly applying a certain amount of heat thereto. Such a measurement is performed in accordance with JIS K-7121. In the measurement, the temperature-rising rate is 10°C/min, and the melting point is determined from a temperature at which a melting peak is observed.

The temperature at which the weight of the polyvinyl alcohol resin decreases by 10% due to heat can be defined as a decomposition temperature of the polyvinyl alcohol resin, in other words, a temperature at which molecular chains thereof are cut by heat and become lower-molecular-weight chains having a 10%-decreased weight. This temperature is measurable by various means, but is preferably measured by a thermogravimetric differential thermal analyzer (TG-DTA). TG-DTA is an instrument that continuously measures change in weight and thermal (exothermic or endothermic) behavior of a sample when the sample is heated. Such a measurement is performed in accordance with JIS K-0129. The measurement is performed under an inert gas (e.g., nitrogen) atmosphere. The temperature-rising rate is 10°C/min. The temperature at which the weight decreases by 10% is determined from the TG curve based on the weight of polyvinyl alcohol resin at 100°C.

When the difference between the melting point and the temperature at which the weight decreases by 10% is 100°C or more, in the process of molding filaments of the support material or modeling a stereoscopic modeling product with a three-dimensional modeling device using the support material, the water-decomposable resin composition included in the support material is prevented from being decomposed or solidified and clogging nozzles. Since an influence of thermal decomposition is small, the support material can be modeled at a temperature at which proper melt viscosity is exerted, thereby preventing nozzle clogging caused by viscosity increase. Thus, the support material is rapidly and easily removable from the modeled product with fewer modeling mistakes.

When the difference between the melting point and the temperature at which the weight decreases by 10% is less than 100°C, a part of the polyvinyl alcohol resin is decomposed in the process of modeling or molding, thereby lowering modeled product supportability and the accuracy of the modeled product. In addition, since a margin of the melt temperature is lowered, nozzle clogging or degradation in adhesiveness to a lower layer may be caused. As a result, modeling is performed unstably while modeling mistakes are frequently made. The accuracy of the modeled or molded product may be lowered and defects may be generated.

The upper limit of the difference between the melting point of the polyvinyl alcohol resin and the temperature at which the weight thereof decreases by 10% due to heat is preferably as large as possible, and is typically about 200°C according to the nature of the resin.

Preferably, the polyvinyl alcohol resin has a 1,2-glycol bond in its side chain. In particular, the polyvinyl alcohol resin preferably has a 1,2-diol structure, more specifically, a 1,2-glycol structural unit represented by the following formula (1). The polyvinyl alcohol resin having the above structure is commercially available from The Nippon Synthetic Chemical Industry Co., Ltd. as G-Polymer Series.

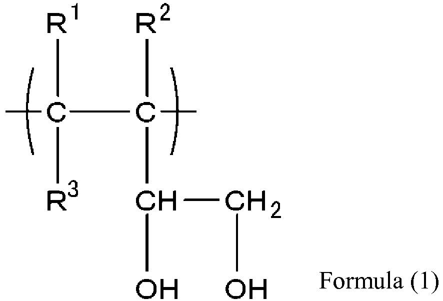

In the formula (1), each of R1, R2, and R3 independently represents hydrogen or an alkyl group. Preferably, the alkyl group is an alkyl group having 1 to 4 carbon atoms, such as methyl group, ethyl group, n-propyl group, isopropyl group, n-butyl group, isobutyl group, and tert-butyl group, but it not limited thereto. The alkyl group may have a substituent such as halogen group, hydroxyl group, ester group, carboxylic acid group, and sulfonic acid group.

The polyvinyl alcohol resin may further have a structural unit derived from other copolymerization components. Specific examples of the structural unit derived from other copolymerization components include, but are not limited to, a structural unit derived from an α-olefin such as ethylene, propylene, isobutylene, α-octene, α-dodecene, and α-octadecene. The content of the α-olefin in the polyvinyl alcohol resin is preferably from 0.1% to 10% by weight, more preferably 2% to 8% by weight.

The polyvinyl alcohol resin may further have a structural unit derived from an unsaturated monomer. Specific examples of the unsaturated monomer include, but are not limited to, unsaturated acids (e.g., acrylic acid, methacrylic acid, crotonic acid, maleic acid, maleic anhydride, itaconic acid) and salts and monoalkyl or dialkyl esters thereof, nitriles (e.g., acrylonitrile, methacrylonitrile), amides (e.g., diacetone acrylamide, acrylamide, methacrylamide), olefin sulfonic acids (e.g., ethylene sulfonic acid, allyl sulfonic acid, methallyl sulfonic acid) and salts thereof, alkyl vinyl ethers, dimethylallyl vinyl ketone, N-vinylpyrrolidone, vinyl chloride, vinylidene chloride, polyoxyalkylene meth(allyl) ethers (e.g., polyoxyethylene meth(allyl) ether, polyoxypropylene meth(allyl) ether), polyoxyalkylene (meth)acrylates (e.g., polyoxyethylene (meth)acrylate, polyoxypropylene (meth)acrylate), polyoxyalkylene (meth)acrylamides (e.g., polyoxyethylene (meth)acrylamide, polyoxypropylene (meth)acrylamide), polyoxyethylene(1-(meth)acrylamide-1,1-dimethylpropyl) ester, polyoxyethylene vinyl ether, polyoxypropylene vinyl ether, polyoxyethylene allylamine, polyoxypropylene allylamine, polyoxyethylene vinylamine, and polyoxypropylene vinylamine.

Specific examples of the unsaturated monomer further include, but are not limited to, cationic-group-containing monomers and acetoacetyl-group-containing monomers, such as N-acrylamide methyl trimethyl ammonium chloride, N-acrylamide ethyl trimethyl ammonium chloride, N-acrylamide propyl trimethyl ammonium chloride, 2-acryloxyethyl trimethyl ammonium chloride, 2-methacryloxyethyl trimethyl ammonium chloride, 2-hydroxy-3-methacryloyloxypropyl trimethyl ammonium chloride, allyl trimethyl ammonium chloride, methallyl trimethyl ammonium chloride, 3-butene trimethyl ammonium chloride, dimethyl diallyl ammonium chloride, and diethyl diallyl ammonium chloride.

In the saponification, an alkali metal salt or an alkaline-earth metal salt is used. In view of improvement in melt molding property, specific preferred examples of the alkali metal salt include potassium or sodium salts of organic acids (e.g., acetic acid, propionic acid, butyric acid, lauric acid, stearic acid, oleic acid, behenic acid) and inorganic acids (e.g., sulfuric acid, sulfurous acid, carbonic acid, phosphoric acid), and specific preferred examples of the alkaline-earth metal salt include calcium or magnesium salts of organic acids (e.g., acetic acid, propionic acid, butyric acid, lauric acid, stearic acid, oleic acid, behenic acid) and inorganic acids (e.g., sulfuric acid, sulfurous acid, carbonic acid, phosphoric acid).

Preferably, the polyvinyl alcohol resin has heat-melting property so that the resin composition has heat-melting property. Heat-meltable polyvinyl alcohol resins include thermoplastic polyvinyl alcohol resin and thermosetting polyvinyl alcohol resin. Among them, thermoplastic polyvinyl alcohol resin is preferred because of having water solubility. The melting start temperature of the polyvinyl alcohol resin may be equal to or lower than that of a model material used in combination, but is not limited thereto. The melting start temperature of the polyvinyl alcohol resin is preferably in the range of 180°C to 250°C, more preferably 190°C to 230°C. When the melting start temperature is higher than 250°C, there is a possibility that the polyvinyl alcohol resin decomposes in the process of molding. When the melting start temperature is lower than 180°C, defective modeling may occur. The melting start temperature can be measured with a flow tester.

In accordance with some embodiments of the present invention, the polyvinyl alcohol resin includes the structural unit represented by the formula (1) in an amount of 1% to 15% by mol, preferably 2% to 10% by mol, and more preferably 3% to 9% by mol. When the molar ratio of the structural unit represented by the formula (1) is too high, it is likely that it becomes more difficult to obtain a polyvinyl alcohol resin having a desired degree of polymerization. When the molar ratio of the structural unit represented by the formula (1) is too low, the melting point becomes higher and comes close to the thermal decomposition temperature. As a result, it is likely that burnt deposit, gel, and fish-eye are easily caused.

The polyvinyl alcohol resin preferably has an average degree of polymerization (measured according to JIS K6726) in the range of 200 to 1,800, more preferably 300 to 1,500, and most preferably 300 to 1,000. When the average degree of polymerization is too high, it is likely that melt viscosity becomes so high that modeling or molding property decreases. When the average degree of polymerization is too low, it is likely that mechanical strength of the modeled or molded product becomes insufficient.

The saponification degree (measured according to JIS K6726) of the polyvinyl alcohol resin is not limited to a particular value and determined depending on the purpose of use, solubility, moisture resistance, and the like. Preferably, the polyvinyl alcohol is a partially saponified type with a saponification degree of 90% by mol or less rather than a completely saponified type. When the polyvinyl alcohol resin is a completely saponified type, nozzle clogging may occur to cause defective discharge or water-solubility may degrade, resulting in deterioration in modeling stability or support material removal efficiency.

### Water Absorptive Resin

The water absorptive resin is a polymeric material having a function of absorbing and retaining water. As the water absorptive resin, "super absorbent polymers" defined in JIS K7223 are preferably used. In particular, hydrophilic substances having cross-linked structure which absorb water upon contact therewith and hardly release the absorbed water even upon application of pressure thereto are preferably used.

Specific examples of the water absorptive resin include, but are not limited to, synthetic polymers and natural-product-derived water absorptive resins. Specific examples of the synthetic polymers include, but are not limited to, compounds having at least one structural unit selected from acrylic acid, sulfonic acid, maleic anhydride, acrylamide, vinyl alcohol, and ethylene oxide. Specific examples of the natural-product-derived water absorptive resins include, but are not limited to, compounds having at least one structural unit selected from asparagine acid, glutamic acid, alginic acid and glucose (starch and cellulose).

Specific examples of the water absorptive resin having the above-described structural unit include a polymer including one of the above-described structural units as a monomer, a copolymer including two or more of the above-described structural units as monomers, a copolymer including the above-described structural unit and another structural unit as monomers, a polymer including a derivative of the above-described structural unit as a monomer, neutralization salts thereof, and cross-linked products thereof.

Among these materials, polyacrylate is preferable in view of its affinity for water. Specific preferred examples of the polyacrylate include sodium polyacrylate, but are not limited thereto.

The water absorption rate of the water absorptive resin, measured based on the testing method described in JIS K7224, is preferably 40 seconds or less, more preferably 20 seconds or less, and most preferably 2 seconds or less. When the water absorption rate is in excess of 40 seconds, the decomposition time of the resin composition immersed in water may become long.

Preferably, the water absorptive resin is granular to be easily dispersed in the polyvinyl alcohol resin. The average particle diameter of the water absorptive resin may be from 25 to 370 µm, preferably from 70 to 350 µm. When the average particle diameter is less than 25 µm, no influence may exert on speedup of the water absorption rate. When the average particle diameter is greater than 370 µm, defective discharge may occur in the process of modeling. The average particle diameter can be measured with a dynamic light scattering particle size analyzer.

The water absorptive resin may account for 0.1% to 40% by weight, preferably 5% to 10% by weight, of the resin composition. When the water absorptive resin accounts for less than 0.1% by weight of the resin composition, no influence may exert on speedup of the water absorption rate. When the water absorptive resin accounts for greater than 40% by weight of the resin composition, it may become difficult to be kneaded with other resins.

### Foaming Agent

Specific examples of the foaming agent for use in the resin composition include, but are not limited to, a foaming agent which foams to generate a gas, more specifically, which generates a gas upon contact with water. Specific examples of the foaming agent include, but are not limited to, hydrocarbon, an inorganic chemical foaming agent, an organic chemical foaming agent, and an expandable microcapsule.

Specific examples of the hydrocarbon include, but are not limited to, propane, normal butane, isobutane, cyclobutane, normal pentane, isopentane, cyclopentane, normal hexane, isohexane, cyclohexane, normal heptane, isoheptane, and cycloheptane. Each of these materials can be used alone or in combination with others. Among these materials, a mixed butane of normal butane with isobutane is preferable.

Specific examples of the inorganic chemical foaming agent include, but are not limited to, ammonium carbonate, sodium bicarbonate (baking soda), and sodium nitrate anhydride. Specific examples of the organic chemical foaming agent include, but are not limited to, dinitrosopentamethylenetetramine, N,N'-dimethyl-N,N'-dinitrosoterephthalamide, benzenesulfonyl hydrazide, p,p'-oxybis(benzenesulfoyl hydrazide), and azodicarbonamide.

The expandable micro capsule generally includes a thermoplastic resin as an outer shell component and a foaming agent (expansion agent) contained therein. Specific examples of the thermoplastic resin for forming the outer shell of the expandable micro capsule include, but are not limited to, homopolymers or copolymers including a structural unit of acrylonitrile, methacrylonitrile, acrylate, methacrylate, vinyl halide, vinylidene halide, styrene monomer, vinyl acetate, or the like. The thermoplastic resin may be cross-linked or cross-linkable with a cross-linking agent such as divinylbenzene, ethylene glycol diacrylate, and ethylene glycol dimethacrylate.

Sodium bicarbonate (baking soda) is preferably used as the foaming agent, since it foams upon contact with hot water or an acidic aqueous solution.

The foaming agent may account for 0.1% to 40% by weight, preferably 5% to 10% by weight, of the resin composition. When the foaming agent accounts for less than 0.1% by weight of the resin composition, no influence may exert on speedup of the water absorption rate. When the foaming agent accounts for greater than 40% by weight of the resin composition, it may become difficult to be kneaded with other resins.

### Filler

The filler for use in the resin composition is not limited to any particular material so long as it accelerates decomposition of the support material when the resin composition is used as the support material.

Specific examples of the filler include, but are not limited to, inorganic fillers such as dimethylpolysiloxane (PDMS), talc, clay, montmorillonite, calcium carbonate, glass bead, glass fiber, silica, mica, alumina, hydrotalcite, titanium oxide, zirconium oxide, boron nitride, and aluminum nitride, and organic fillers such as melamine-formalin resin. Among these materials, dimethylpolysiloxane is preferable for reforming resin. In the case where hot water is not used for decomposing the support material, baking soda, described above as an example of the foaming agent, can be used as the filler.

The filler may account for 0.1% to 40% by weight, preferably 5% to 10% by weight, of the resin composition. When the filler accounts for less than 0.1% by weight of the resin composition, no influence may exert on speedup of the water absorption rate. When the filler accounts for greater than 40% by weight of the resin composition, it may become difficult to be kneaded with other resins.

### Other Constituent Materials

The resin composition may further include other constituent materials, if needed.

### Resin Composition

The resin composition is obtainable by melt-mixing the above-described constituent materials. The melt-mixing may be performed by a continuous method by means of double axis kneader, single axis kneader, or melt molder, or a batch method by means of kneader or mixer.

Properties of the resin composition can be adjusted in accordance with the types and addition amounts of the constituent materials. The melting start temperature of the resin composition is not limited so long as it is lower than a supposed molding temperature. For example, when ABS (Acrylonitrile Butadiene Styrene) resin is used as the model material, the melting start temperature of the resin composition is preferably in the range of 180°C to 230°C, more preferably 190°C to 220°C, depending on the addition amount. When the melting start temperature is lower than 180°C or higher than 230°C, it may be difficult to form the support material using the resin composition.

The melt viscosity of the resin composition is preferably in the range of 400 to 2,300 Pa·s at a supposed molding temperature, e.g., in the range of 190°C to 210°C. When the melt viscosity is lower than 400 Pa·s or higher than 2,300 Pa·s, it may be difficult to form the support material using the resin composition.

The melt viscosity and melting start temperature of the support material are greatly influenced by the polyvinyl alcohol resin that has the highest viscosity among the constituent materials. By contrast, the water absorptive resin, foaming agent, filler, and other constituent materials have a small influence on the melt viscosity and melting start temperature of the support material.

The heat decomposition temperature of the resin composition is preferably 250°C or higher, more preferably 300°C or higher. When the heat decomposition temperature is lower than 250°C, the resin may decompose in the process of modeling and be colored.

The resin composition can be used for various purposes. In particular, the resin composition can be used as a support material for use in three-dimensional modeling because of having sufficient rigidity and water decomposability or solubility.

### Support Material and Modeled Product

Specific methods of forming a support material for use in three-dimensional modeling using the resin composition include, but are not limited to, a method using a fused deposition modeling (FDM) type three-dimensional modeling machine. In this method, for example, a 3D printer serving as the three-dimensional modeling machine ejects the resin composition while melting and scanning it to form a layer of the resin composition having a predetermined shape and repeats this operation to laminate the layers.

On the support material formed of the resin composition, the three-dimensional modeling machine further ejects a model material formed of another resin composition to form a model material layer having a predetermined shape. By repeating this operation, the model material layers are laminated to obtain a modeled product. The modeled product formed of the model material has a shape corresponding to the shape of at least a part of the support material, as illustrated in FIG. 1B.

As the modeled product is immersed in water along with the support material, the support material is allowed to melt or decompose and easily removed from the modeled product, thus providing the modeled product having less damage and residual support material.

### EXAMPLES

Having generally described this invention, further understanding can be obtained by reference to certain specific examples which are provided herein for the purpose of illustration only and are not intended to be limiting. In the description of the following examples, the numbers represent weight ratios in parts, unless otherwise specified.

Raw materials listed in Tables 1-1 to 1-3 are melt-mixed with a polymer extruder and further molded into a strand shape. Thus, strand-shaped resin compositions of Examples 1 to 46 and Comparative Examples 1 to 21 are obtained.
Polymer extruder: HAAKE Mini Lab II available from Thermo Fisher Scientific, Inc.
Screw revolution: 70 n/min
Mixing temperature: 195°C
Mixing time: 3 minutes
Details of the raw materials listed in Tables 1-1 to 1-3 are described below.

### PVAs

8150P: G-Polymer™ OKS-8150P available from The Nippon Synthetic Chemical Industry Co., Ltd., a vinyl alcohol copolymer having water solubility and heat-melting property
8095P: G-Polymer™ OKS-8095P available from The Nippon Synthetic Chemical Industry Co., Ltd., a vinyl alcohol copolymer having water solubility and heat-melting property
8164P: G-Polymer™ OKS-8164P available from The Nippon Synthetic Chemical Industry Co., Ltd., a vinyl alcohol copolymer having water solubility and heat-melting property
8163P: G-Polymer™ OKS-8163P available from The Nippon Synthetic Chemical Industry Co., Ltd., a vinyl alcohol copolymer having water solubility and heat-melting property
8153P: G-Polymer™ OKS-8153P available from The Nippon Synthetic Chemical Industry Co., Ltd., a vinyl alcohol copolymer having water solubility and heat-melting property
8049: G-Polymer™ OKS-8049 available from The Nippon Synthetic Chemical Industry Co., Ltd., a vinyl alcohol copolymer having water solubility and heat-melting property
8089: G-Polymer™ OKS-8089 available from The Nippon Synthetic Chemical Industry Co., Ltd., a vinyl alcohol copolymer having water solubility and heat-melting property
1210: CP-1210 available from Kuraray Co., Ltd., a polyvinyl alcohol resin having water solubility and heat-melting property
1220: CP-1220 available from Kuraray Co., Ltd., a polyvinyl alcohol resin having water solubility and heat-melting property
JR05: JR-05 available from Japan Vam & Poval Co., Ltd., a partially-saponified unmodified polyvinyl alcohol resin
JL05: JR-05E available from Japan Vam & Poval Co., Ltd., a partially-saponified unmodified polyvinyl alcohol resin
JP05: JP-05S available from Japan Vam & Poval Co., Ltd., a partially-saponified unmodified polyvinyl alcohol resin
JF05: JF-05S available from Japan Vam & Poval Co., Ltd., a completely-saponified unmodified polyvinyl alcohol resin
205: PVA205 available from Kuraray Co., Ltd., a partially-saponified unmodified polyvinyl alcohol resin
105: PVA105 available from Kuraray Co., Ltd., a completely-saponified unmodified polyvinyl alcohol resin
GL05: GL-05S available from The Nippon Synthetic Chemical Industry Co., Ltd., a partially-saponified unmodified polyvinyl alcohol resin
Z100: GOHSENX™ Z100 available from The Nippon Synthetic Chemical Industry Co., Ltd., a completely-saponified unmodified polyvinyl alcohol resin

### Water Absorptive Resins

NF: 10SH-NF available from Sumitomo Seika Chemicals Company Limited, a water absorptive resin having a median diameter of 25 µm
PF: 10SH-PF available from Sumitomo Seika Chemicals Company Limited, a water absorptive resin having a median diameter of 160 µm
SA-60S: SA60S available from Sumitomo Seika Chemicals Company Limited, a water absorptive resin having a median diameter of 350 µm

### Foaming Agents

AD101: ADVANCELL EML101 available from Sekisui Chemical Co., Ltd., a foaming agent having an expansion start temperature of 120-130°C
AD501: ADVANCELL EM501 available from Sekisui Chemical Co., Ltd., a foaming agent having an expansion start temperature of 210-230°C

### Fillers

PDMS: Polysilane available from Nippon Soda Co., Ltd. Baking Soda: sodium hydrogen carbonate

### Formation of Support Material

Each of the strand-shaped resin compositions is ejected while being scanned by a three-dimensional modeling machine to have a diameter of 1.75 mm. Thus, support materials of Examples 1 to 31 and Comparative Examples 1 to 16 are obtained. The molding conditions are as follows.

Three-dimensional modeling machine: Replicator 2X available from MakerBot® Industries, LLC
Molding temperature: 190-210°C

### Evaluation of Water Decomposability

Each of the above-prepared support material is immersed in water having room temperature (i.e., 23°C). After a lapse of the time described in Tables 1-1 to 1-3, the degree of progress of decomposition of the support material is determined with reference to a standard sample. In Tables 1-1 to 1-3, E indicates that a support material is not decomposed at all, and A indicates that a support material is completely decomposed. B and C each indicate that a support material is not completely dissolved, but remains soft and can be destroyed by one's hand. D and E each indicate that a support material remains hard and cannot be destroyed by one's hand. B is higher than C in terms of decomposability. D is higher than E in terms of decomposability. In Tables 1-1 to 1-3, "-" indicates that no evaluation is performed.

### Evaluation of Discharge Property from Nozzles

The above-modeled support material is set to the three-dimensional modeling machine again and ejected from its nozzles while being scanned. Thus, a stereoscopic modeled product is prepared. Whether the support material is stably discharged from the nozzles or not is evaluated. The modeling conditions are as follows.

Three-dimensional modeling machine: Replicator 2X available from MakerBot® Industries, LLC
Modeling temperature: 210°C
Evaluation criteria are as follows.
A: Discharged stably without causing defective discharge.
B: Defective discharge occurred in part.
C: Defective discharge occurred frequently.
D: Not discharged.

**Table 1-1**

| | PVA | | Water Absorptive Resin | | Foaming Agent | | Filler | | Dissolution Time (min) | | | | | Discharge Stability from Nozzles |
|---|---|---|---|---|---|---|---|---|---|---|---|---|---|---|
| | Product Name | wt% | Product Name | wt% | Product Name | wt% | Product Name | wt% | 10 | 60 | 120 | 300 | 1440 | |
| Example 1 | 8150P | 99 | PF | 1 | | | | | - | D | D | C | C | A |
| Example 2 | 8150P | 95 | PF | 5 | | | | | - | D | C | C | C | A |
| Example 3 | 8150P | 89 | PF | 1 | AD101 | 10 | | | - | D | C | C | B | B |
| Example 4 | 8150P | 85 | PF | 5 | AD101 | 10 | | | D | D | C | B | A | B |
| Example 5 | 8150P | 85 | PF | 10 | AD101 | 5 | | | D | C | B | A | - | B |
| Example 6 | 8150P | 85 | PF | 5 | AD501 | 10 | | | - | D | C | B | A | B |
| Example 7 | 8150P | 89 | PF | 10 | AD501 | 1 | | | - | B | B | A | - | B |
| Example 8 | 8150P | 87 | PF | 10 | AD501 | 3 | | | - | B | A | - | - | B |
| Example 9 | 8150P | 85 | PF | 10 | AD501 | 5 | | | - | B | A | - | - | B |
| Example 10 | 8150P | 94 | PF | 1 | | | Baking Soda | 5 | - | D | C | C | C | B |
| Example 11 | 8150P | 85 | PF | 5 | | | PDMS | 10 | D | C | B | B | B | B |
| Example 12 | 8150P | 95 | NF | 5 | | | | | - | - | E | D | C | A |
| Example 13 | 8150P | 85 | NF | 5 | AD101 | 10 | | | D | D | D | D | C | B |
| Example 14 | 8150P | 85 | NF | 10 | AD101 | 5 | | | D | D | D | C | B | B |
| Example 15 | 8150P | 95 | SA60S | 5 | | | | | D | D | C | C | B | A |
| Example 16 | 8150P | 85 | SA60S | 5 | AD101 | 10 | | | D | D | C | B | B | B |
| Example 17 | 8095P | 85 | PF | 5 | AD101 | 10 | | | C | B | A | - | - | B |
| Example 18 | 8095P | 85 | PF | 5 | AD501 | 10 | | | C | A | - | - | - | B |
| Comparative Example 1 | 8150P | 100 | | | | | | | E | E | E | E | E | A |
| Comparative Example 2 | 8150P | 99 | | | AD101 | 1 | | | - | E | E | E | E | A |
| Comparative Example 3 | 8150P | 95 | | | AD101 | 5 | | | - | E | E | E | D | B |
| Comparative Example 4 | 8150P | 90 | | | AD101 | 10 | | | - | E | E | D | D | B |
| Comparative Example 5 | 8150P | 90 | | | | | Baking Soda | 10 | - | E | E | D | C | C |
| Comparative Example 6 | 8150P | 95 | | | | | PDMS | 5 | E | E | E | E | D | B |
| Comparative Example 7 | 8095P | 100 | | | | | | | - | E | E | E | D | A |
| Comparative Example 8 | 8095P | 80 | | | AD101 | 10 | Baking Soda | 10 | - | E | D | D | C | C |

**Table 1-2**

| | PVA | | Water Absorptive Resin | | Foaming Agent | | Filler | | Dissolution Time (min) | | | | | Discharge Stability from Nozzles |
|---|---|---|---|---|---|---|---|---|---|---|---|---|---|---|
| | Product Name | wt% | Product Name | wt% | Product Name | wt% | Product Name | wt% | 10 | 60 | 120 | 300 | 1440 | |
| Example 19 | 8164P | 85 | PF | 5 | AD101 | 10 | | | A | - | - | - | - | B |
| Example 20 | 8164P | 99 | PF | 1 | | | | | C | B | A | - | - | A |
| Example 21 | 8164P | 97 | PF | 3 | | | | | B | B | A | - | - | A |
| Example 22 | 8164P | 97 | PF | 2 | AD101 | 1 | | | B | A | - | - | - | A |
| Example 23 | 8163P | 97 | PF | 3 | | | | | C | C | B | A | - | A |
| Example 24 | 8163P | 96 | PF | 2 | | | PDMS | 2 | C | B | A | - | - | A |
| Example 25 | 8153P | 98 | SA60S | 2 | | | | | D | D | C | C | B | A |
| Example 26 | 8153P | 98 | SA60S | 1 | AD101 | 1 | | | D | D | C | B | A | A |
| Example 27 | 8153P | 96 | SA60S | 2 | | | PDMS | 2 | D | C | B | A | - | A |
| Example 28 | 8049 | 98 | PF | 2 | | | | | D | D | D | C | C | B |
| Example 29 | 8049 | 97 | PF | 2 | AD101 | 1 | | | D | D | C | C | C | B |
| Example 30 | 8049 | 97 | PF | 2 | | | Baking Soda | 1 | D | D | C | C | B | B |
| Example 31 | 8089 | 98 | PF | 2 | | | | | D | D | C | C | C | A |
| Example 32 | 8089 | 96 | PF | 2 | AD101 | 2 | | | D | D | C | C | B | A |
| Example 33 | 1210 | 98 | SA60S | 2 | | | | | D | D | D | D | C | B |
| Example 34 | 1210 | 96 | SA60S | 2 | AD101 | 2 | | | D | D | D | C | C | B |
| Example 35 | 1220 | 98 | PF | 2 | | | | | D | D | D | D | C | B |
| Example 36 | 1220 | 96 | PF | 2 | AD501 | 2 | | | D | D | D | C | C | B |
| Example 37 | JR05 | 98 | PF | 2 | | | | | D | D | D | C | C | B |
| Example 38 | JR05 | 96 | PF | 2 | AD501 | 1 | Baking Soda | 1 | D | D | C | C | B | B |
| Example 39 | JL05 | 98 | PF | 2 | | | | | D | D | D | D | C | B |
| Example 40 | JL05 | 96 | PF | 2 | AD501 | 2 | | | D | D | D | C | C | B |
| Example 41 | JP05 | 98 | PF | 2 | | | | | E | D | D | D | C | B |
| Example 42 | JP05 | 96 | PF | 2 | AD501 | 2 | | | E | D | D | C | C | B |
| Example 43 | GL05 | 98 | PF | 2 | | | | | E | D | D | D | C | B |
| Example 44 | GL05 | 96 | PF | 2 | AD101 | 2 | | | E | D | D | C | C | B |
| Example 45 | 205 | 98 | PF | 2 | | | | | E | D | D | D | C | B |
| Example 46 | 205 | 96 | PF | 2 | AD101 | 2 | | | E | D | D | C | C | B |

**Table 1-3**

| | PVA | | Water Absorptive Resin | | Foaming Agent | | Filler | | Dissolution Time (min) | | | | | Discharge Stability from Nozzles |
|---|---|---|---|---|---|---|---|---|---|---|---|---|---|---|
| | Product Name | wt% | Product Name | wt% | Product Name | wt% | Product Name | wt% | 10 | 60 | 120 | 300 | 1440 | |
| Comparative Example 9 | 105 | 98 | PF | 2 | | | | | E | E | E | E | D | D |
| Comparative Example 10 | 105 | 96 | PF | 2 | AD101 | 2 | | | E | E | E | E | D | D |
| Comparative Example 11 | 105 | 85 | PF | 5 | AD101 | 10 | | | E | E | D | D | C | D |
| Comparative Example 12 | 105 | 100 | | | | | | | E | E | E | E | E | D |
| Comparative Example 13 | Z100 | 95 | SA60S | 5 | | | | | E | E | E | E | D | D |
| Comparative Example 14 | Z100 | 84 | SA60S | 10 | AD101 | 5 | Baking Soda | 1 | E | E | E | D | D | D |
| Comparative Example 15 | Z100 | 100 | | | | | | | E | E | E | E | E | D |
| Comparative Example 16 | JF05 | 98 | PF | 2 | | | | | E | E | E | E | D | D |
| Comparative Example 17 | JF05 | 90 | PF | 5 | AD101 | 5 | | | E | E | E | D | D | D |
| Comparative Example 18 | JF05 | 100 | | | | | | | E | E | E | E | E | D |
| Comparative Example 19 | JL05 | 100 | | | | | | | E | E | E | E | D | B |
| Comparative Example 20 | JP05 | 100 | | | | | | | E | E | E | E | D | B |
| Comparative Example 21 | GL05 | 100 | | | | | | | E | E | E | E | D | B |

### DSC

The above-described polyvinyl alcohol resins are subjected to a measurement of melting point by DSC under the following conditions. The melting point is determined from a top of an endothermic peak. The results are shown in Table 2.
Instrument: DSC-60A available from Shimadzu Corporation
Temperature rising rate: 10°C/min
Measuring temperature range: 40°C - 400°C

### TG-DTA

The above-described polyvinyl alcohol resins are subjected to a measurement of the temperature at which the weight decreases by 10% by TG-DTA under the following conditions. The temperature is determined from a temperature at which the weight at 100°C is decreased by 10% on the obtained TG curve. The results are shown in Table 2.
Instrument: DTG-60 available from Shimadzu Corporation
Temperature rising rate: 10°C/min
Measuring temperature range: 40°C - 500°C

**Table 2**

| PVA | Melting Point (°C) | Temperature at 10%-Weight Decrease (°C) | Temperature Difference (°C) |
|---|---|---|---|
| 8150P | 174 | 314 | 140 |
| 8095P | 165 | 316 | 151 |
| 8164P | 170 | 312 | 142 |
| 8163P | 166 | 334 | 168 |
| 8153P | 174 | 325 | 151 |
| 8049 | 186 | 322 | 136 |
| 8089 | 154 | 307 | 153 |
| 1210 | 161 | 297 | 136 |
| 1220 | 160 | 292 | 132 |
| JR05 | 172 | 294 | 122 |
| JL05 | 182 | 295 | 113 |
| JP05 | 190 | 303 | 113 |
| GL05 | 192 | 302 | 110 |
| 205 | 194 | 301 | 107 |
| Z100 | 209 | 290 | 81 |
| JF05 | 225 | 281 | 56 |
| 105 | 225 | 273 | 48 |

### Example 2-1 and Comparative Example 2-1

Procedure for forming a support material in Example 1 is repeated except that the constituent materials are replaced with those listed in Table 3. The resulting support material is immersed in a 10% aqueous solution of citric acid having room temperature (i.e., 23°C) to evaluate water decomposability. The results are shown in Table 3. Since baking soda foams upon contact with an acidic aqueous solution, it is listed as a foaming agent in Table 3.

**Table 3**

| | Raw Materials % by weight) | | | | | | | | | Evaluation Results (min) | | | | | | |
|---|---|---|---|---|---|---|---|---|---|---|---|---|---|---|---|---|
| | PVA | | Water Absorptive Resin | | | Foaming Agent | | | Filler | | | | | | | |
| No. | 8153P | 8095P | PF | NF | SA60S | AD101 | AD501 | Baking Soda | PDMS | 5 | 10 | 30 | 60 | 120 | 300 | 1440 |
| Example 2-1 | 85 | | 5 | | | | | 10 | | - | - | D | C | C | B | A |
| Comparative Example 2-1 | 90 | | | | | | | 10 | | - | - | D | D | D | D | C |

### Example 3-1 and Comparative 3-1

Procedure for forming a support material in Example 1 is repeated except that the constituent materials are replaced with those listed in Table 4. The resulting support material is immersed in hot water having a temperature of 100°C to evaluate water decomposability. The results are shown in Table 4. Since baking soda foams upon contact with hot water, it is listed as a foaming agent in Table 4.

**Table 4**

| | Raw Materials % by weight) | | | | | | | | | Evaluation Results (min) | | | | | | |
|---|---|---|---|---|---|---|---|---|---|---|---|---|---|---|---|---|
| | PVA | | Water Absorptive Resin | | | Foaming Agent | | | Filler | | | | | | | |
| No. | 8153P | 8095P | PF | NF | SA60S | AD101 | AD501 | Baking Soda | PDMS | 5 | 10 | 30 | 60 | 120 | 300 | 1440 |
| Example 3-1 | 85 | | 5 | | | | | 10 | | B | B | A | - | - | - | - |
| Comparative Example 3-1 | 100 | | | | | | | | | D | D | D | D | - | - | - |

### Comparative Examples 4-1 and 4-2

Procedure for forming a support material in Example 1 is repeated except that the constituent materials are replaced with those listed in Table 5. The resulting support material is subjected to an evaluation of water decomposability in the same manner as Example 1. The results are shown in Table 5. In Table 5, PLA is a product 4032D available from NatureWorks LLC.

**Table 5**

| | Raw Materials (% by weight) | | | | | | | | Evaluation Results (min) | | | | | | |
|---|---|---|---|---|---|---|---|---|---|---|---|---|---|---|---|
| | PLA | Water Absorptive Resin | | | Foaming Agent | | Filler | | | | | | | | |
| No. | | PF | NF | SA60S | AD101 | AD501 | Baking Soda | PDMS | 5 | 10 | 30 | 60 | 120 | 300 | 1440 |
| Comparative Example 4-1 | 100 | | | | | | | | - | - | E | E | E | - | - |
| Comparative Example 4-2 | 85 | 5 | | | 10 | | | | - | - | E | E | E | - | - |

## Claims

1. A water-decomposable resin composition, comprising:
a polyvinyl alcohol resin, the polyvinyl alcohol resin having a melting point and a temperature at which the weight thereof decreases by 10% with respect to the weight of the polyvinyl alcohol resin at 100°C due to heat, the difference between the melting point and this temperature being 100°C or more; and
a water absorptive resin.

2. The water-decomposable resin composition according to claim 1, wherein the difference between the melting point and the temperature at which the weight of the polyvinyl alcohol resin decreases by 10% due to heat is 140°C or more .

3. The water-decomposable resin composition according to claim 1 or 2, wherein the polyvinyl alcohol resin has a 1,2-diol structure represented by the following formula (1): 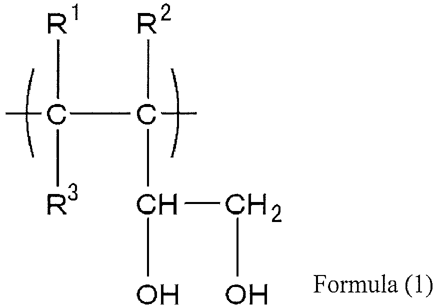 wherein each of R¹, R², and R³ independently represents hydrogen or an alkyl group.

4. The water-decomposable resin composition according to any one of claims 1 to 3, wherein the water absorptive resin has at least one structural unit selected from the group consisting of acrylic acid, sulfonic acid, maleic anhydride, acrylamide, vinyl alcohol, ethylene oxide, asparagine acid, glutamic acid, alginic acid and glucose.

5. The water-decomposable resin composition according to any one of claims 1 to 4, wherein the water absorptive resin has an average particle diameter in the range of 25 to 370 µm, as measured with a dynamic light scattering particle size analyzer.

6. The water-decomposable resin composition according to any one of claims 1 to 5, further comprising a foaming agent.

7. The water-decomposable resin composition according to claim 6, wherein the foaming agent generates a gas upon contact with water.

8. The water-decomposable resin composition according to any one of claims 1 to 7, further comprising a filler.

9. A support material (10) for use in modeling, comprising the water-decomposable resin composition according to any one of claims 1 to 8.

## Patentansprüche

1. Wasserabbaubare Harzzusammensetzung, umfassend:
ein Polyvinylalkoholharz, wobei das Polyvinylalkoholharz einen Schmelzpunkt und eine Temperatur aufweist, bei der das Gewicht davon um 10 % mit Bezug auf das Gewicht des Polyvinylalkoholharzes bei 100 °C aufgrund von Hitze abnimmt, wobei der Unterschied zwischen dem Schmelzpunkt und dieser Temperatur 100 °C oder mehr beträgt; und
ein wasserabsorptionsfähiges Harz.

2. Wasserabbaubare Harzzusammensetzung nach Anspruch 1, wobei der Unterschied zwischen dem Schmelzpunkt und der Temperatur, bei der das Gewicht des Polyvinylalkoholharzes um 10 % aufgrund von Hitze abnimmt, 140 °C oder mehr beträgt.

3. Wasserabbaubare Harzzusammensetzung nach Anspruch 1 oder 2, wobei das Polyvinylalkoholharz eine 1,2-Diolstruktur aufweist, die durch die folgende Formel (1) dargestellt ist: 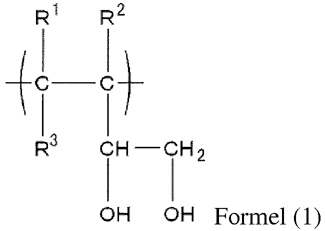 wobei jedes von R¹, R² und R³ unabhängig Wasserstoff oder eine Alkylgruppe darstellt.

4. Wasserabbaubare Harzzusammensetzung nach einem der Ansprüche 1 bis 3, wobei das wasserabsorptionsfähige Harz mindestens eine strukturelle Einheit aufweist, ausgewählt aus der Gruppe bestehend aus Acrylsäure, Sulfonsäure, Maleinsäureanhydrid, Acrylamid, Vinylalkohol, Ethylenoxid, Asparaginsäure, Glutaminsäure, Algininsäure und Glucose.

5. Wasserabbaubare Harzzusammensetzung nach einem der Ansprüche 1 bis 4, wobei das wasserabsorptionsfähige Harz einen durchschnittlichen Teilchendurchmesser im Bereich von 25 bis 370 µm, wie mit einem dynamischen Lichtstreuungsteilchengrößenanalysator gemessen, aufweist.

6. Wasserabbaubare Harzzusammensetzung nach einem der Ansprüche 1 bis 5, ferner ein Schäumungsmittel umfassend.

7. Wasserabbaubare Harzzusammensetzung nach Anspruch 6, wobei das Schäumungsmittel auf den Kontakt mit Wasser hin ein Gas erzeugt.

8. Wasserabbaubare Harzzusammensetzung nach einem der Ansprüche 1 bis 7, ferner einen Füllstoff umfassend.

9. Trägermaterial (10) zur Verwendung zum Modellieren, umfassend die wasserabbaubare Harzzusammensetzung nach einem der Ansprüche 1 bis 8.

## Revendications

1. Composition de résine pouvant être décomposée dans l'eau, comprenant:
une résine de poly(alcool de vinyle), la résine de poly(alcool de vinyle) ayant un point de fusion et une température à laquelle son poids baisse de 10 % par rapport au poids de la résine de poly(alcool de vinyle) à 100°C dû à la chaleur, la différence entre le point de fusion et cette température étant de 100°C ou plus; et
une résine absorbant l'eau.

2. Composition de résine pouvant être décomposée dans l'eau selon la revendication 1, dans laquelle la différence entre le point de fusion et la température à laquelle le poids de la résine de poly(alcool de vinyle) baisse de 10 % dû à la chaleur est de 140°C ou plus.

3. Composition de résine pouvant être décomposée dans l'eau selon la revendication 1 ou 2, dans laquelle la résine de poly(alcool de vinyle) présente une structure de 1,2-diol représentée par la formule suivante (1): 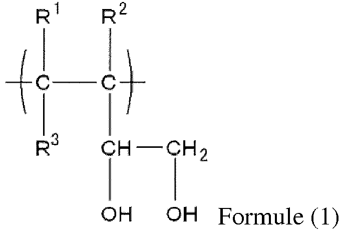 où chacun de R¹, R², et R³ représente indépendamment un atome d'hydrogène ou un groupe alkyle.

4. Composition de résine pouvant être décomposée dans l'eau selon l'une quelconque des revendications 1 à 3, dans laquelle la résine absorbant l'eau présente au moins un motif structurel sélectionné dans le groupe constitué de l'acide acrylique, de l'acide sulfonique, de l'anhydride maléique, de l'acrylamide, de l'alcool de vinyle, de l'oxyde d'éthylène, de l'acide d'asparagine, de l'acide glutamique, de l'acide alginique et du glucose.

5. Composition de résine pouvant être décomposée dans l'eau selon l'une quelconque des revendications 1 à 4, dans laquelle la résine absorbant l'eau présente un diamètre moyen de particule situé dans la plage de 25 à 370 µm, tel que mesuré avec un appareil d'analyse de la taille de particule à diffusion dynamique de la lumière.

6. Composition de résine pouvant être décomposée dans l'eau selon l'une quelconque des revendications 1 à 5, comprenant en outre un agent d'expansion.

7. Composition de résine pouvant être décomposée dans l'eau selon la revendication 6, dans laquelle l'agent d'expansion génère un gaz lors du contact avec l'eau.

8. Composition de résine pouvant être décomposée dans l'eau selon l'une quelconque des revendications 1 à 7, comprenant en outre une charge.

9. Matériau formant support (10) pour l'utilisation dans le modelage, comprenant
la composition de résine pouvant être décomposée dans l'eau selon l'une quelconque des revendications 1 à 8.
